# FASCICULE DE BREVET EUROPEEN

(11) **EP 1 442 556 B1**
(45) Date de publication et mention de la délivrance du brevet: **29.07.2020**
(21) Numéro de dépôt: 02785576.6
(22) Date de dépôt: 31.10.2002
(51) Int. Cl.: H04L 9/06

(54) **PROCÉDÉ SECURISÉ DE MISE EN OEUVRE D'UN ALGORITHME DE CRYPTOGRAPHIE ET COMPOSANT CORRESPONDANT**
GESICHERTES VERFAHREN ZUR DURCHFÜHRUNG EINES KRYPTOGRAPHISCHEN ALGORITHMUS SOWIE DIESBEZÜGLICHER BAUSTEIN
METHOD FOR SECURE OPERATION OF A FUNCTIONAL MODULE IN AN ELECTRONIC COMPONENT AND CORRESPONDING COMPONENT

(30) Priorité: 31.10.2001 FR 0114132
(43) Date de publication de la demande: 04.08.2004
(73) Titulaire: THALES DIS FRANCE SA, 92190 Meudon (FR)
(72) Inventeur: GUTERMAN, Pascal, F-13360 Roquevaire (FR); FEYT, Nathalie, F-13780 Cuges Les Pins (FR); CLAVIER, Christophe, 13400 AUBAGNE (FR); PETIT, Sébastien, F-83330 Le Beausset (FR); PROUST, Philippe, F-04300 Sigonce (FR)
(74) Mandataire: Thomas, Christine Marie Catherine
(86) Numéro de dépôt international: PCT/FR2002/003756
(87) Numéro de publication internationale: WO 2003/039065

(56) Documents cités:
- EP-A- 1 263 163
- EP-A2- 1 052 801
- WO-A1-00/42511
- FR-A- 2 776 410
- GB-A- 2 345 229
- US-A- 4 295 041
- JEAN SEBASTIEN CORONPAUL KOCHERDAVID NACCACHE: "Statistics and Secret Leakage", 26 October 2001 (2001-10-26), INTERNATIONAL CONFERENCE ON FINANCIAL CRYPTOGRAPHY FC 2000, FINANCIAL CRYPTOGRAPHY, PAGE(S) 157 - 173, XP009193670, ISBN: 978-3-540-42700-1

## Description

La présente invention concerne un procédé de mise en œuvre sécurisée d'un module fonctionnel dans un composant électronique.

L'invention se rapporte également au composant électronique correspondant.

On entend par module fonctionnel, un module matériel dédié à l'exécution d'une fonction qui peut être un algorithme, ce module matériel étant inclus dans un composant électronique ; ce peut être également un module logiciel constitué d'un programme visant à réaliser une fonction qui peut être un algorithme, ce module logiciel étant mis en œuvre dans un composant électronique.

De tels composants sont notamment utilisés dans des applications où l'accès à des services ou à des données est sévèrement contrôlé, telles que les applications de cryptographie.

Ils ont une architecture dite logicielle, c'est-à-dire programmable formée autour d'un microprocesseur et de mémoires, dont une mémoire programme non volatile qui contient un ou plusieurs nombre(s) secret(s) ; il s'agit d'une architecture généraliste apte à exécuter n'importe quel algorithme. Ils peuvent aussi être complétés par une architecture dite matérielle, c'est-à-dire comportant un (ou plusieurs) coprocesseur(s) dédié(s) à l'exécution de calculs spécifiques ou d'un seul algorithme qui présente l'avantage d'exécuter l'algorithme beaucoup plus rapidement que dans le cas d'une architecture logicielle.

Dans le cas par exemple de l'algorithme de cryptographie à clé secrète DES, acronyme anglo-saxon pour "Data Encryption Standard", qui peut être utilisé pour chiffrer un message, l'exécution est de 1000 à 10000 fois plus rapide lorsqu'elle est effectuée par un coprocesseur.

Ces composants sont utilisés dans des systèmes informatiques, embarqués ou non ; ils sont notamment utilisés dans les cartes à puce, pour certaines applications de celles-ci. Ce sont par exemple des applications d'accès à certaines banques de données, des applications bancaires, des applications de télépéage, par exemple pour la télévision, la distribution d'essence ou encore le passage de péages d'autoroutes.

Ces composants ou ces cartes mettent donc en œuvre un algorithme de cryptographie pour assurer le chiffrement, l'authentification ou la signature numérique d'un message lorsque celui-ci doit demeurer confidentiel.

A partir de ce message appliqué en entrée à la carte par un système hôte (serveur, distributeur bancaire...) et de nombres secrets contenus dans la carte, la carte fournit en retour au système hôte ce message chiffré, authentifié ou signé, ce qui permet par exemple au système hôte d'authentifier le composant ou la carte, d'échanger des données, ....

Les caractéristiques des algorithmes de cryptographie peuvent être connues : calculs effectués, paramètres utilisés. La seule inconnue est le ou les nombres secrets. Toute la sécurité de ces algorithmes de cryptographie tient dans ce(s) nombre(s) secret(s) contenu (s) dans la carte et inconnu (s) du monde extérieur à cette carte. Ce nombre secret ne peut être déduit de la seule connaissance du message appliqué en entrée et du message chiffré fourni en retour.

Or il est apparu que des attaques externes basées sur des grandeurs physiques mesurables à l'extérieur du composant lorsque celui-ci est en train de dérouler l'algorithme de cryptographie, permettent à des tiers mal intentionnés de trouver le(s) nombre(s) secret(s) contenu(s) dans cette carte. Ces attaques sont appelées attaques à canaux cachés ("Side channel attacks" en anglais) ; on distingue parmi ces attaques à canaux cachés, les attaques SPA acronyme anglo-saxon pour *Single Power Analysis* basées sur une voire quelques mesures et les attaques DPA, acronyme anglo-saxon pour *Differential Power Analysis* basées sur des analyses statistiques issues de nombreuses mesures.

Le principe de ces attaques à canaux cachés repose par exemple sur le fait que la consommation en courant du microprocesseur et/ou du coprocesseur exécutant des instructions varie selon l'instruction ou la donnée manipulée.

Ce type d'attaque est notamment envisageable avec les algorithmes de cryptographie à clé secrète comme par exemple l'algorithme DES ou à clé publique comme par exemple l'algorithme RSA du nom de ses auteurs (Rivest, Shamir et Adleman).

Certains procédés de contre-mesure permettant de parer les attaques visant à obtenir la clé secrète, consistent à ne pas manipuler directement la clé secrète.

Une autre contre-mesure consiste à brouiller temporellement la consommation en courant du composant, en utilisant le module fonctionnel sensible à des instants aléatoires ; l'attaquant ne peut alors repérer facilement le début de l'utilisation du module sensible. Cette contre-mesure est dite non déterministe.

On peut aussi brouiller en amplitude la consommation en courant du composant, en activant puis désactivant divers éléments de la carte qui consomment également du courant. Le signal intéressant se trouve alors enfoui parmi les signaux de ces éléments de la carte.

Enfin, EP1263163 propose de protéger un algorithme à répétition de rondes dans lesquelles l'introduction de fautes (Differential Fault Attack) peut mener à une détermination de la clé, en introduisant des paires de rondes supplémentaires factices utilisant de fausses clés et commençant toujours après la fin d'une ronde correcte.

Le but de la présente invention est donc de protéger un module fonctionnel sensible d'une architecture logicielle et/ou matérielle contre des attaques intervenant lors de son exécution, notamment contre les attaques à canaux cachés telles que les attaques DPA.

L'invention a pour objet un procédé de mise en œuvre sécurisée d'un module fonctionnel, dans un composant électronique, principalement caractérisé en ce qu'il consiste, pour chaque mise en œuvre dudit module, à réaliser dans un ordre aléatoire, m exécutions correctes et n exécutions factices dudit module, m et n étant des entiers positifs non nuls, les m+n exécutions débutant chacune à un instant aléatoire.

Avantageusement m<n.

Selon un mode de réalisation préférentiel de l'invention, les n exécutions factices sont identiques.

Selon une caractéristique de l'invention, les n exécutions factices sont déterminées en fonction de l'exécution correcte.

Selon une caractéristique additionnelle de l'invention, le nombre P de mises en œuvre des m+n exécutions du module est limité.

Selon une autre caractéristique de l'invention, les m+n exécutions du module fonctionnel sont à code constant et à temps constant.

Selon un mode de réalisation de l'invention, le composant comprenant des éléments consommateurs de courant, un ou plusieurs de ces éléments sont activés puis désactivés de manière à brouiller la consommation en courant du composant.

Le module fonctionnel peut avoir pour fonction un algorithme de cryptographie.

Selon un mode de réalisation de l'invention, l'algorithme de cryptographie utilise une clé K et chacune des m exécutions correctes consiste à exécuter ledit algorithme en utilisant la clé K et chacune des n exécutions factices consiste à exécuter ledit algorithme en utilisant respectivement une fausse clé K'₁, ...,K'ₙ.

Les fausses clés sont de préférence identiques, K'₁ =...=K'ₙ=K'.

L'invention a également pour objet un composant électronique comportant des moyens de mise en œuvre sécurisée d'un module fonctionnel tels que décrits précédemment.

Il comporte avantageusement un coprocesseur dédié à la mise en œuvre du module fonctionnel.

L'invention concerne aussi une carte à puce comportant un composant électronique tel que décrit.

Le procédé selon l'invention vise à protéger un module fonctionnel contre des attaques intervenant lors de son exécution, notamment contre les attaques à canaux cachés telles que les attaques DPA.

Lorsque la fonction du module fonctionnel est un algorithme, celui-ci peut être un algorithme de vérification du code "PIN" au travers d'un terminal, ou un algorithme de cryptographie comme par exemple l'algorithme DES.

Dans la suite de la description, on va plus particulièrement considérer comme module fonctionnel, un module matériel dédié à l'exécution d'un algorithme de cryptographie de type DES ; on le désigne dans la suite par DES.

A partir du message M fourni en entrée au module matériel, en l'occurrence un coprocesseur désigné par "CoDES", celui-ci fournit en sortie le message MC chiffré au moyen d'une clé secrète K.

Selon l'invention, à chaque fois que le DES doit être mis en œuvre, le DES est exécuté plusieurs fois, dans un ordre aléatoire, m fois de façon correcte, c'est-à-dire en utilisant la clé secrète K et n fois de façon factice en utilisant de fausses clés K'₁, K'₂, ..., K'ₙ de manière à leurrer un attaquant.

A partir d'une architecture matérielle, une exécution du DES est très rapide : celle-ci peut alors être répétée plusieurs fois, par exemple 8 fois, sans que cela soit réellement pénalisant.

On choisit de préférence m<<n, par exemple m=1 et n=7.

Exécuter le DES m+n fois dans un ordre aléatoire signifie que pour chaque exécution du DES, la clé est choisie de manière aléatoire parmi les clés restantes, c'est-à-dire parmi les clés n'ayant pas encore été utilisées. Comme on le verra plus loin pour divers modes de réalisation de l'invention, l'ordre aléatoire peut aussi consister à choisir la première clé de manière aléatoire, le choix des clés suivantes étant déterminé ou encore à déterminer une séquence aléatoire.

Selon un mode de réalisation de l'invention, les vraie et fausses clés K, K'₁, ..., K'₇ sont stockées dans une table Clés et repérées par un index i variant de 0 à 7 et les résultats correspondant à chacune des clés sont stockés dans une table Rés dans un emplacement repéré par exemple par le même index i.

L'index de la première clé est choisi de façon aléatoire. La première clé a par exemple l'index 2; il s'agit donc de K'₂. Le DES est alors exécuté une première fois avec cette première clé K'₂ pour chiffrer par exemple le message M et le résultat obtenu R₂ est stocké dans la table Rés à l'index 2. Le DES est ensuite exécuté avec la clé suivante, la clé K'₃ pour chiffrer le message M et le résultat R₃ est stocké dans la table Rés à l'index 3, etc. La 7^{ième} exécution du DES est effectuée avec la clé K'₁ pour chiffrer le message M et la dernière avec la clé K.

L'emplacement du bon résultat R dans la table Rés qui correspond à celui de la bonne clé dans la table Clés, est connu d'avance : dans notre exemple, il s'agit de l'emplacement repéré par l'index 1. Mais bien sûr, l'instant auquel ce résultat R est stocké n'est pas connu.

Lorsque les fausses clés sont différentes comme c'est le cas dans le mode de réalisation qui vient d'être décrit, les signaux de consommation en courant leur correspondant sont difficilement repérables : chacun de ces signaux sont quasiment équivalents car ils ont en quelque sorte le même poids. Mais ils ne constituent pas un leurre vis-à-vis d'attaques de type DPA.

C'est pourquoi, selon un autre mode de réalisation préférentiel de l'invention, les n utilisations factices sont identiques, c'est-à-dire que les fausses clés K'₁, K'₂, ..., K'ₙ sont identiques et égales à K' .

Ainsi, dans le cas d'attaques statistiques telles que les attaques DPA, le signal correspondant à la clé K' est plus accentué (n fois) que celui correspondant à la clé K ; le signal correspondant à la vraie clé K est noyé dans le bruit de calcul de celui de la fausse clé K' .

Dans ce cas, la table Clés ne comporte que deux clés, la vraie clé K et la fausse clé K'. De même la table Rés ne comporte que deux résultats. Le DES est également exécuté 8 fois, 7 fois avec la fausse clé et une fois avec la vraie clé.

Lorsque la clé K est repérée par l'index 0, et la clé K' par l'index 1, le choix aléatoire des clés peut être obtenu de la manière suivante. On choisit un nombre aléatoire de 8 bits comportant 7 bits à 1 et un bit à zéro, par exemple 11101111. Les trois premières et quatre dernières exécutions du DES sont effectuées avec la clé repérée par l'index 1, c'est-à-dire la fausse clé et la quatrième exécution est effectuée avec la varie clé, repérée par l'index 0.

D'autres variantes peuvent être réalisées comme par exemple celle qui consiste à ce que quelques fausses clés soient identiques tandis que les autres fausses clés diffèrent les unes des autres.

Par ailleurs, selon un mode de réalisation particulier, l'algorithme de cryptographie est à code constant et à temps constant, c'est-à-dire qu'il exécute toujours les mêmes instructions et que les données manipulées n'interagissent pas sur la durée de l'algorithme.

En outre, d'une fois sur l'autre, c'est-à-dire d'une mise en œuvre des m+n exécutions à l'autre, l'ordre des exécutions correctes et factices est aléatoire. Lorsque m=1 ; lors d'une première mise en œuvre des n+1 DES, débutant au temps t₁, l'exécution correcte (avec la clé K) intervient en 3è position, les n autres exécutions étant des exécutions factices avec les fausses clés K'₁, K'₂, ..., K'ₙ (éventuellement égales à K'); lors de la seconde mise en œuvre des n+1 DES, débutant au temps t₂, l'exécution correcte (avec la clé K) intervient en 1ère position, les n autres exécutions étant des exécutions factices avec les fausses clés K'₁, K'₂, ..., K'ₙ (éventuellement égales à K') ; ... ; lors de la Pième mise en œuvre des n+1 DES, débutant au temps t_{P}, l'exécution correcte (avec la clé K) intervient en 2è position, les n autres exécutions étant des exécutions factices avec les fausses clés K'₁, K'₂, ..., K'ₙ (éventuellement égales à K').

Avantageusement, on limite le nombre P de mises en œuvre des m+n exécutions du DES de manière à contrecarrer les tentatives de l'attaquant qui dans le cas d'une attaque de type DPA, consisteraient à augmenter le nombre d'acquisitions de signaux.

Selon un mode de réalisation préférentiel, les fausses clés K'₁, K'₂, ..., K'ₙ (éventuellement égales à K') sont déterminées en fonction de la vraie clé K. Lorsque la clé K est changée, les fausses clés K'₁, K'₂, ..., K'ₙ (éventuellement égales à K') sont régénérées.

Les fausses clés K'₁, K'₂, ..., K'ₙ (éventuellement égales à K') sont généralement stockées en mémoire comme on l'a vu dans les exemples de réalisation précédents ; elles peuvent néanmoins être recalculées ou tirées au hasard d'une fois sur l'autre.

Lorsque m>1, par exemple m=2, il est possible de comparer les m résultats corrects obtenus afin de détecter une attaque par faute, c'est-à-dire dans le cas d'une erreur injectée. Il s'agit alors de détecter une attaque par faute tout en se protégeant des attaques à canaux cachés.

Selon un autre mode de réalisation, on ajoute un brouillage temporel de la consommation en courant du composant, en utilisant le DES à des instants aléatoires et/ou on ajoute un brouillage en amplitude, en activant puis désactivant divers éléments de la carte qui consomment également du courant.

## Revendications

1. Procédé de mise en œuvre sécurisée d'un module fonctionnel, ayant pour fonction un algorithme de cryptographie, dans un composant électronique, l'algorithme de cryptographie utilisant une clé K, et consistant, pour chaque mise en œuvre dudit module, à réaliser dans un ordre aléatoire,
- m exécutions correctes dudit module, chaque exécution correcte consistant à exécuter ledit algorithme en utilisant ladite clé K, et
- n exécutions factices dudit module, chaque exécution factice consistant à exécuter ledit algorithme en utilisant respectivement une fausse clé K'₁, ...,K'ₙ,
m et n étant des entiers positifs non nuls,
et **caractérisé en ce que** lesdites m+n exécutions débutent chacune à un instant aléatoire.

2. Procédé selon la revendication précédente, **caractérisé en ce que** m<n.

3. Procédé selon l'une quelconque des revendications précédentes, **caractérisé en ce que** les n exécutions factices sont identiques.

4. Procédé selon l'une quelconque des revendications précédentes, **caractérisé en ce que** les n exécutions factices sont déterminées en fonction de l'exécution correcte.

5. Procédé selon l'une quelconque des revendications précédentes, **caractérisé en ce que** le nombre P de mises en œuvre des m+n exécutions dudit module est limité.

6. Procédé selon la revendication précédente, **caractérisé en ce que** les m+n exécutions dudit module fonctionnel sont à code constant et à temps constant.

7. Procédé selon l'une quelconque des revendications précédentes, **caractérisé en ce que** ledit composant comprenant des éléments consommateurs de courant, un ou plusieurs desdits éléments sont activés puis désactivés de manière à brouiller la consommation en courant du composant.

8. Procédé selon la revendication 1, **caractérisé en ce que** les fausses clés sont identiques, K'₁=...=K'ₙ=K'.

9. Composant électronique comportant des moyens de mise en œuvre sécurisée d'un module fonctionnel selon l'une quelconque des revendications précédentes.

10. Composant électronique selon la revendication précédente, **caractérisé en ce qu'**il comporte un coprocesseur dédié à la mise en œuvre dudit module fonctionnel.

11. Carte à puce comportant un composant électronique selon l'une quelconque des revendications 9 ou 10.

## Patentansprüche

1. Verfahren zur gesicherten Anwendung eines Funktionsmoduls, das einen kryptographischen Algorithmus zur Aufgabe hat, in einem elektronischen Baustein, wobei der kryptographische Algorithmus einen Schlüssel K verwendet, und das darin besteht, bei jeder Anwendung des Moduls in zufälliger Reihenfolge Folgendes zu bewerkstelligen:
- m ordnungsgemäße Ausführungen des Moduls, wobei jede ordnungsgemäße Ausführung darin besteht, den Algorithmus unter Verwendung des Schlüssels K auszuführen, und
- n Pseudo-Ausführungen des Moduls, wobei jede Pseudo-Ausführung darin besteht, den Algorithmus jeweils unter Verwendung eines falschen Schlüssels K'₁, ..., K'ₙ auszuführen,
wobei m und n positive ganze Zahlen ungleich null sind,
und **dadurch gekennzeichnet**, das die m+n Ausführungen jeweils zu einem zufälligen Zeitpunkt beginnen.

2. Verfahren nach dem vorhergehenden Anspruch, **dadurch gekennzeichnet, dass** m < n ist.

3. Verfahren nach einem der vorhergehenden Ansprüche, **dadurch gekennzeichnet, dass** die n Pseudo-Ausführungen identisch sind.

4. Verfahren nach einem der vorhergehenden Ansprüche, **dadurch gekennzeichnet, dass** die n Pseudo-Ausführungen in Abhängigkeit von der ordnungsgemäßen Ausführung bestimmt werden.

5. Verfahren nach einem der vorhergehenden Ansprüche, **dadurch gekennzeichnet, dass** die Zahl P der Anwendungen der m+n Ausführungen des Moduls begrenzt ist.

6. Verfahren nach dem vorhergehenden Anspruch, **dadurch gekennzeichnet, dass** die m+n Ausführungen des Funktionsmoduls mit unverändertem Code und unveränderter Laufzeit erfolgen.

7. Verfahren nach einem der vorhergehenden Ansprüche, **dadurch gekennzeichnet, dass** der Baustein, welcher Strom verbrauchende Elemente umfasst, eines oder mehrere dieser Elemente aktiviert, dann deaktiviert werden, derart, dass der Stromverbrauch des Bausteins verschleiert wird.

8. Verfahren nach Anspruch 1, **dadurch gekennzeichnet, dass** die falschen Schlüssel identisch sind: K'₁ =...= K'ₙ = K'.

9. Elektronischer Baustein, der Mittel zur gesicherten Anwendung eines Funktionsmodul nach einem der vorhergehenden Ansprüche umfasst.

10. Elektronischer Baustein nach dem vorhergehenden Anspruch, **dadurch gekennzeichnet, dass** er einen Coprozessor umfasst, der dafür ausgelegt ist, das Funktionsmodul anzuwenden.

11. Chipkarte, einen elektronischen Baustein nach einem der Ansprüche 9 oder 10 umfassend.

## Claims

1. A method for secure operation of a functional module, having a cryptographic algorithm as a function, in an electronic component, the cryptographic algorithm using a key K, and comprising, for each operation of said module, performing the following in random order,
- m correct executions of said module, each correct execution comprising executing said algorithm using said key K, and
- n dummy executions of said module, each dummy execution comprising executing said algorithm using, respectively, a false key K'₁, ..., K'ₙ,
where m and n are non-zero positive integers,
and **characterised in that** said m+n executions each start at a random point in time.

2. The method according to the preceding claim, **characterised in that** m<n.

3. The method according to any one of the preceding claims, **characterised in that** the n dummy executions are identical.

4. The method according to any one of the preceding claims, **characterised in that** the n dummy executions are determined on the basis of the correct execution.

5. The method according to any one of the preceding claims, **characterised in that** the number P of operations of the m+n executions of said module is limited.

6. The method according to the preceding claim, **characterised in that** the m+n executions of said functional module are constant with respect to code and with respect to time.

7. The method according to any one of the preceding claims, **characterised in that** since said component comprises current-consuming elements, one or more of said elements are activated and then deactivated so as to scramble the current consumption of the component.

8. The method according to claim 1, **characterised in that** the false keys are identical, K'₁=...=K'ₙ=K'.

9. An electronic component comprising means for secure operation of a functional module according to any one of the preceding claims.

10. The electronic component according to the preceding claim, **characterised in that** it comprises a co-processor dedicated to the operation of said functional module.

11. A chip card comprising an electronic component according to any one of claims 9 or 10.
